# EUROPÄISCHE PATENTANMELDUNG

(11) **EP 4 835 313 A1**
(43) Veröffentlichungstag der Anmeldung: **04.11.2026**
(21) Anmeldenummer: 26172141.9
(22) Anmeldetag: 14.04.2026
(51) Int. Cl.: F16C 29/04, F16C 33/58

(54) **TELESKOPSCHIENE**

(30) Priorität: 28.04.2025 DE 102025116331
(71) Anmelder: Accuride International GmbH, 65582 Diez/Lahn (DE)
(72) Erfinder: Heffel, Andreas, 56269 Dierdorf (DE); Trémolières, Laurent, 65550 Limburg-Linter (DE); Krebs, Philipp, 65558 Langenscheid (DE)
(74) Vertreter: WSL Patentanwälte Partnerschaft mbB

(57) **Zusammenfassung**

Die vorliegende Erfindung betrifft eine Teleskopschiene (6) mit einem ersten Schienenelement (1), einem ersten Wälzkörperkäfig (12) mit einer darin aufgenommenen Mehrzahl von ersten Wälzkörpern (13), einem zweiten Schienenelement (2), einem zweiten Wälzkörperkäfig (14) mit einer darin aufgenommenen Mehrzahl von zweiten Wälzkörpern (15), einem dritten Schienenelement (3), einem dritten Wälzkörperkäfig (16) mit einer darin aufgenommenen Mehrzahl von dritten Wälzkörpern (17), einem vierten Schienenelement (4).

## Beschreibung

Die vorliegende Erfindung betrifft eine Teleskopschiene mit einem ersten Schienenelement, einem ersten Wälzkörperkäfig mit einer darin aufgenommenen Mehrzahl von ersten Wälzkörpern, einem zweiten Schienenelement, einem zweiten Wälzkörperkäfig mit einer darin aufgenommenen Mehrzahl von zweiten Wälzkörpern, einem dritten Schienenelement, einem dritten Wälzkörperkäfig mit einer darin aufgenommenen Mehrzahl von dritten Wälzkörpern und einem vierten Schienenelement. Dabei bilden das erste Schienenelement, das zweite Schienenelement, der erste Wälzkörperkäfig mit der Mehrzahl von ersten Wälzkörpern ein lineares erstes Wälzlager, sodass das zweite Schienenelement in und entgegen einer Auszugsrichtung verschiebbar an dem ersten Schienenelement gelagert ist, das zweite Schienenelement, das dritte Schienenelement und der zweite Wälzkörperkäfig mit der Mehrzahl von zweiten Wälzkörpern bilden ein lineares zweites Wälzlager, sodass das dritte Schienenelement in und entgegen einer Auszugsrichtung verschiebbar an dem zweiten Schienenelement gelagert ist, und das dritte Schienenelement, das vierte Schienenelement und der dritte Wälzkörperkäfig mit der Mehrzahl von dritten Wälzkörpern bilden ein lineares drittes Wälzlager, sodass das vierte Schienenelement in und entgegen der Auszugsrichtung verschiebbar an dem dritten Schienenelement gelagert ist.

Teleskopschienen mit einer Mehrzahl von Schienenelementen und Wälzkörperkäfigen mit darin aufgenommenen Wälzkörpern zur Reduzierung der Reibung zwischen den Schienenelementen sind in mannigfaltigen Ausführungsformen aus dem Stand der Technik bekannt. Sie werden in verschiedenen Haushaltsgeräten, aber auch im Automobilbau und in vielen weiteren Anwendungen eingesetzt.

Das Auszugsverhältnis einer linearen Teleskopschiene beschreibt das Verhältnis zwischen der maximalen Auszugslänge der Teleskopschiene und der Einbaulänge der Teleskopschiene im geschlossenen, vollständig eingeschobenen Zustand. Dabei sind die Auszugslänge und die Einbaulänge in der Auszugsrichtung gemessen. Das Auszugsverhältnis wird üblicherweise in Prozent angegeben und berechnet sich wie folgt: $Auszugsverhältnis \left(in Prozent\right) = \left(Auszugslänge/Einbaulänge\right) * 100$

Beispielsweise bedeutet ein Auszugsverhältnis von 100 %, dass die Teleskopschiene im vollständig ausgezogenen Zustand in der Auszugsrichtung doppelt so lang ist wie im geschlossenen, vollständig eingeschobenen Zustand.

Je nach Konstruktion unterscheidet man einen Teilauszug, einen Vollauszug und einen Überauszug. Ein Teilauszug hat ein Auszugsverhältnis von etwa 60 bis 80 %. Die Teleskopschiene besteht dann aus zwei Schienenelementen. Ein Vollauszug hat ein Auszugsverhältnis von etwa 100 % und wird mit drei Schienenelementen realisiert. Ein Überauszug hat ein Auszugsverhältnis von mehr als 100 % und wird ab einem Auszugsverhältnis von 125 % mit vier Schienenelementen gebildet. Es ist bekannt, mit vierteiligen Schienenelementen ein Auszugsverhältnis in einem Bereich von 125 % bis 170 % zu adressieren. Derartige vierteilige Teleskopschienen erreichen jedoch häufig nicht die für hohe Lasten erforderliche Tragfähigkeit. Zur Erhöhung der Tragfähigkeit werden bei solchen vierteiligen Teleskopschienen extrudierte oder gefräste Schienenelemente genutzt, da der Bauraum für verstärkte Profile aus Stahlblech nicht ausreicht und die notwendige Stabilität nicht anders erzielt werden kann.

Daher ist es Aufgabe der vorliegenden Erfindung gegenüber dem Stand der Technik, eine Teleskopschiene mit einem Auszugsverhältnis in einem Bereich von 125 % bis 170 % bereitzustellen, die eine erhöhte Tragfähigkeit aufweist.

Diese Aufgabe wird erfindungsgemäß mit einer Teleskopschiene gemäß dem unabhängigen Anspruch 1 gelöst. Dazu weist die Teleskopschiene der eingangs genannten Art einen vierten Wälzkörperkäfig mit einer darin aufgenommenen Mehrzahl von vierten Wälzkörpern und ein fünftes Schienenelement auf, wobei das vierte Schienenelement, das fünfte Schienenelement und der vierte Wälzkörperkäfig mit der Mehrzahl von vierten Wälzkörpern ein lineares viertes Wälzlager bilden, sodass das fünfte Schienenelement in und entgegen der Auszugsrichtung verschiebbar an dem vierten Schienenelement gelagert ist. Erfindungsgemäß sind das erste, das zweite, das dritte, das vierte und das fünfte Schienenelement sowie der erste, der zweite, der dritte und der vierte Wälzkörperkäfig derart ausgestaltet, dass die Teleskopschiene ein Auszugsverhältnis in einem Bereich von 125 % bis 170 % aufweist.

Die Erhöhung der Anzahl von Schienenelementen über die für das zu erzielende Auszugsverhältnis benötigte Anzahl hinaus führt dazu, dass die Traglast der Teleskopschiene erheblich gesteigert wird. Im Gegensatz zu anderen Konzepten kann auf das zusätzliche Verstärken einzelner Schienenelemente verzichtet werden. Die erfindungsgemäße Teleskopschiene ist daher sogar mit Schienenelementen aus Metallblech, die durch Biegen, insbesondere Rollformen oder Pressformen, hergestellt werden, realisierbar.

In einer Ausführungsform der Erfindung liegt das mit der Teleskopschiene realisierte Auszugsverhältnis in einem Bereich von 140 % bis 160 % und insbesondere bei 150 %. Ein Auszugsverhältnis von 150 % ist gleichbedeutend damit, dass im vollständig ausgezogenen Zustand der Teleskopschiene eine Gesamtlänge der Teleskopschiene in der Auszugsrichtung etwa 2,5-mal einer Länge des ersten Schienenelements in der Auszugsrichtung oder 2,5-mal der Einbaulänge beträgt.

In einer Ausführungsform der Erfindung sind die fünf Schienenelemente sowie die vier Wälzkörperkäfige derart ausgestaltet, dass das erste Schienenelement und das zweite Schienenelement zueinander, das zweite Schienenelement und das dritte Schienenelement zueinander, das dritte und das vierte Schienenelement zueinander, sowie das vierte Schienenelement und das fünfte Schienenelement zueinander jeweils ein Auszugsverhältnis in einem Bereich von 30 % bis 50 % aufweisen. In einer Ausführungsform der Erfindung liegt das Auszugsverhältnis der genannten Paare von Schienenelementen zueinander in einem Bereich von 35 % bis 40 %. Mit anderen Worten ausgedrückt wird in einer solchen Ausführungsform keines der Schienenelemente gegenüber dem Schienenelement, mit welchem es ein Wälzlager bildet, um mehr als die Hälfte seiner Länge ausgezogen. In einer weiteren Ausführungsform beträgt das Auszugsverhältnis zweier ein Wälzlager bildender Schienenelemente 37,5 %.

Dabei sind in einer Ausführungsform die Auszugsverhältnisse aller Paare von beweglich aneinander gelagerten Schienenelementen identisch. Durch diese Maßnahme lässt sich die Tragkraft der Teleskopschiene weiter erhöhen.

Es ist für die Stabilität der Teleskopschiene zweckmäßig, wenn der Überdeckungsbereich in der Auszugsrichtung im vollständig ausgezogenen Zustand zweier Schienenelemente, die ein Wälzlager miteinander bilden, möglichst über seine gesamte Länge hinweg Wälzkörper aufweist. Auch im Überdeckungsbereich sind dabei die von dem Wälzkörperkäfig geführten Wälzkörper in der Auszugsrichtung voneinander beabstandet.

In einer Ausführungsform der Erfindung ist zumindest der erste Wälzkörperkäfig derart ausgestaltet, dass im vollständig ausgezogenen Zustand der Teleskopschiene ein maximaler Abstand in der Auszugsrichtung zweier erster Wälzkörper voneinander in einem Überdeckungsbereich des ersten Schienenelements und des zweiten Schienenelements mindestens 80 % einer Überdeckungslänge des ersten Schienenelements und des zweiten Schienenelements in der Auszugsrichtung beträgt, oder der zweite Wälzkörperkäfig derart ausgestaltet ist, dass in dem vollständig ausgezogenen Zustand der Teleskopschiene ein maximaler Abstand in der Auszugsrichtung zweier zweiter Wälzkörper voneinander in einem Überdeckungsbereich des zweiten Schienenelements und des dritten Schienenelements mindestens 80 % einer Überdeckungslänge des zweiten Schienenelements und des dritten Schienenelements in der Auszugsrichtung beträgt, oder der dritte Wälzkörperkäfig derart ausgestaltet ist, dass in dem vollständig ausgezogenen Zustand der Teleskopschiene ein maximaler Abstand in der Auszugsrichtung zweier dritter Wälzkörper voneinander in einem Überdeckungsbereich des dritten Schienenelements und des vierten Schienenelements mindestens 80 % einer Überdeckungslänge des dritten Schienenelements und des vierten Schienenelements in der Auszugsrichtung beträgt, oder der vierte Wälzkörperkäfig derart ausgestaltet ist, dass in dem vollständig ausgezogenen Zustand der Teleskopschiene ein maximaler Abstand in der Auszugsrichtung zweier vierter Wälzkörper voneinander in einem Überdeckungsbereich des vierten Schienenelements und des fünften Schienenelements mindestens 80 % einer Überdeckungslänge des vierten Schienenelements und des fünften Schienenelements in der Auszugsrichtung beträgt.

In einer Ausführungsform der Erfindung gilt diese Bedingung für alle vier Wälzkörperkäfige.

Die Überdeckungslänge ist diejenige Länge gemessen in der Auszugsrichtung, über die sich zwei oder mehr Schienenelemente in der Auszugsrichtung überlappen.

In einer Ausführungsform der Erfindung beträgt der maximale Abstand zweier Wälzkörper voneinander in dem jeweiligen Überdeckungsbereich mindestens 90 % der Überdeckungslänge der jeweiligen Schienenelemente.

Eine möglichst vollständige Abdeckung des Überdeckungsbereichs zweier ein Wälzlager miteinander bildender Schienenelemente mit Wälzkörpern ist insbesondere dann vorteilhaft, wenn es sich zumindest bei einem Teil der Schienenelemente um im Wesentlichen C-förmig gebogene Schienenelemente aus Metallblech handelt. Eine solche C-Form wird von einem Schienenrücken mit ausgehend von dem Schienenrücken abgebogenen Schenkeln verwirklicht. In einer Ausführungsform der Erfindung trägt jeder dieser Schenkel der C-Form zwei Laufflächen für die Wälzkörper zweier Wälzlager. Eine der Laufflächen bildet ein Wälzlager mit einem weiteren Schienenelement und die andere Lauffläche bildet ein Wälzlager mit einem anderen, weiteren Schienenelement. Die Schenkel dieses C-förmigen Schienenelements, das in zwei Wälzlager eingebunden ist, werden dann von beiden Seiten von Wälzkörpern gestützt.

In einer weiteren Ausführungsform der Erfindung weisen das erste, das zweite, das dritte, das vierte und das fünfte Schienenelement eine in der Auszugsrichtung gleiche Länge auf. Alle Schienenelemente sind dann gleich lang.

In einer weiteren Ausführungsform der Erfindung weisen der erste, der zweite, der dritte und der vierte Wälzkörperkäfig eine in der Auszugsrichtung gleiche Länge auf. Alle Wälzkörperkäfige sind dann gleich lang.

In einer Ausführungsform der Erfindung ist die erfindungsgemäße Teleskopschiene aus einem ersten dreiteiligen Auszug und einem zweiten dreiteiligen Auszug mit einem Auszugsverhältnis von jeweils weniger als 100 % gebildet. Bei einem solchen dreiteiligen Auszug werden die drei Schienen auch als Korpusschiene, Mittenschiene und Schubschiene bezeichnet. Dabei werden in der vorliegenden Beschreibung die Begriffe Korpusschiene und Schubschiene nur zur Unterscheidung der Schienenelemente verwendet unabhängig davon, ob die Korpusschiene mit einem feststehenden Element (z.B. einem Schrankkorpus) und die Schubschiene mit einem bewegten Element (z.B. eine Schublade) verbunden ist oder umgekehrt.

Zur Herstellung der erfindungsgemäßen Teleskopschiene wird in einer solchen Ausführungsform daher die Korpusschiene oder die Schubschiene des ersten Auszugs mit der Korpusschiene oder der Schubschiene des zweiten Auszugs verbunden. Dabei können entweder zwei Schubschienen oder zwei Korpusschienen miteinander verbunden sein oder eine Korpusschiene ist mit einer Schubschiene verbunden.

In einer Ausführungsform sind die Korpusschienen oder die Schubschienen durch Verschweißen miteinander verbunden. Alternative Verbindungstechniken sind Verschrauben, Vernieten oder Clinchen.

In einer Ausführungsform der Erfindung sind der erste und der zweite Auszug, die miteinander zur erfindungsgemäßen Teleskopschiene verbunden sind, identisch aufgebaut.

In einer Ausführungsform der Erfindung bestehen das erste, das zweite, das dritte, das vierte und das fünfte Schienenelement jeweils aus einem Metallblechprofil, vorzugsweise aus einem gebogenen Metallblechprofil.

In einer Ausführungsform der Erfindung weisen das zweite, das dritte und das vierte Schienenelement jeweils zwei Paare von Laufflächen auf.

In einer Ausführungsform der Erfindung weisen das erste und das fünfte Schienenelement jeweils mindestens ein Paar von Laufflächen, vorzugsweise aber genau ein Paar von Laufflächen, auf.

In einer Ausführungsform der Erfindung ist der erste Wälzkörperkäfig derart zwischen einem Paar von Laufflächen des ersten Schienenelements und einem Paar von Laufflächen des zweiten Schienenelements angeordnet, dass die Mehrzahl von Wälzkörpern zwischen jeweils einer Lauffläche des ersten Schienenelements und einer Lauffläche des zweiten Schienenelements wälzt, sodass das zweite Schienenelement in und entgegen einer Auszugsrichtung verschiebbar an dem ersten Schienenelement gelagert ist. In einer Ausführungsform der Erfindung ist der zweite Wälzkörperkäfig derart zwischen einem Paar von Laufflächen des zweiten Schienenelements und einem Paar von Laufflächen des dritten Schienenelements angeordnet, dass die Mehrzahl von Wälzkörpern zwischen jeweils einer Lauffläche des zweiten Schienenelements und einer Lauffläche des dritten Schienenelements wälzt, sodass das dritte Schienenelement in und entgegen der Auszugsrichtung verschiebbar an dem zweiten Schienenelement gelagert ist. In einer Ausführungsform der Erfindung ist der dritte Wälzkörperkäfig derart zwischen einem Paar von Laufflächen des dritten Schienenelements und einem Paar von Laufflächen des vierten Schienenelements angeordnet, dass die Mehrzahl von Wälzkörpern zwischen jeweils einer Lauffläche des dritten Schienenelements und einer Lauffläche des vierten Schienenelements wälzt, sodass das vierte Schienenelement in und entgegen der Auszugsrichtung verschiebbar an dem dritten Schienenelement gelagert ist. In einer weiteren Ausführungsform der Erfindung ist der vierte Wälzkörperkäfig derart zwischen einem Paar von Lauffläche des vierten Schienenelements und dem Paar von Laufflächen des fünften Schienenelements angeordnet, dass die Mehrzahl von Wälzkörpern zwischen jeweils einer Lauffläche des vierten Schienenelements und einer Lauffläche des fünften Schienenelements wälzt, sodass das fünfte Schienenelement in und entgegen der Auszugsrichtung verschiebbar an dem vierten Schienenelement gelagert ist.

In einer Ausführungsform weist die erfindungsgemäße Teleskopschiene genau fünf Schienenelemente, nämlich das erste, das zweite, das dritte, das vierte und das fünfte Schienenelement auf. Es sind jedoch Ausführungsformen denkbar, bei denen die Teleskopschiene mehr als fünf Schienenelemente aufweist, solange die von den ersten bis fünften Schienenelementen und den ersten bis vierten Wälzkörperkäfigen gebildete Teleskopschiene die erfindungsgemäßen Eigenschaften aufweist.

**In** einer Ausführungsform der Erfindung weist das zweite Schienenelement ein erstes und ein zweites Paar von Laufflächen auf, wobei die Mehrzahl von ersten Wälzkörpern auf dem ersten Paar von Laufflächen wälzt und die Mehrzahl von zweiten Wälzkörpern auf dem zweiten Paar von Laufflächen wälzt. Es versteht sich, dass in einer solchen Ausführungsform die Mehrzahl von ersten Wälzkörpern auch auf einem ersten Paar von Laufflächen des ersten Schienenelements und die Mehrzahl von zweiten Wälzkörpern auf einem ersten Paar von Laufflächen des dritten Schienenelements wälzen. Dabei sind jeweils eine Lauffläche des ersten Paars von Laufflächen und eine Lauffläche des zweiten Paars von Laufflächen des zweiten Schienenelements voneinander wegzeigend an einem Abschnitt des zweiten Schienenelements angeordnet. Erfindungsgemäß befinden sich daher im vollständig ausgezogenen Zustand der Teleskopschiene im gleichen Abschnitt des zweiten Schienenelements Wälzkörper die auf den beiden Paaren von Laufflächen positioniert sind. Auf diese Weise wirken die Wälzkörper einer Verformung des zweiten Schienenelements entgegen.

**In** einer Ausführungsform der Erfindung zeigen die Oberflächennormalen eines des ersten oder des zweiten Paars von Laufflächen des zweiten Schienenelements zueinander hin und die Oberflächennormalen des anderen Paars von Laufflächen voneinander weg. Ist das zweite Schienenelement im Wesentlichen C-förmig ausgestaltet, so weist das zweite Schienenelement zwei von einem Schienenrücken im Wesentlichen zueinander ausgehende, die Laufflächen tragende Schenkel auf. An jedem Schenkel ist jeweils eine der Laufflächen des ersten Paars und eine der Laufflächen des zweiten Paars angeordnet. an einem Schenkel des zweiten Schienenelements vorgesehenen Laufflächen zeigen somit voneinander weg.

**In** einer Ausführungsform der Erfindung ist zumindest das vierte Schienenelement identisch ausgestaltet, wie das zweite Schienenelement. **In** einer Ausführungsform der erfindungsgemäßen Teleskopschiene weist das vierte Schienenelement ein erstes und ein zweites Paar von Laufflächen auf, wobei die Mehrzahl von dritten Wälzkörpern auf dem ersten Paar von Laufflächen wälzt und die Mehrzahl von vierten Wälzkörpern auf dem zweiten Paar von Lauflächen wälzt., Dabei sind jeweils eine Lauffläche aus dem ersten Paar von Laufflächen und eine Lauffläche aus dem zweiten Paar von Laufflächen voneinander wegzeigend an einem Abschnitt des vierten Schienenelements angeordnet.

In einer Ausführungsform der Erfindung weist zumindest eines der fünf Schienenelemente einen Schienenrücken und zwei jeweils mindestens eine Lauffläche für Wälzkörper tragende, sich gegenüber dem Schienenrücken abgewinkelt erstreckende Schenkel auf. In einer Ausführungsform der Erfindung trägt jeder Schenkel zwei Laufflächen für die Wälzkörper zweier Wälzlager. Eine solche Ausgestaltung ist insbesondere für das zweite Schienenelement und das vierte Schienenelement geeignet.

Unter einem Wälzkörper im Sinne der vorliegenden Anmeldung wird ein Rotationskörper verstanden, der als Element einer Führung die Reibung zwischen den verschiedenen Schienenelementen erheblich reduziert und damit eine Relativbewegung zweier Schienenelemente zueinander erleichtert. Wälzkörper sind beispielsweise Rollen, Tonnen, Nadeln oder Kegel. In einer Ausführungsform der vorliegenden Erfindung sind die Wälzkörper Lagerkugeln. Es versteht sich, dass in einer solchen Ausführungsform der Wälzkörperkäfig ein Kugelkäfig ist.

In einer Ausführungsform der Erfindung ist zumindest eines der fünf Schienenelemente aus einem Material gefertigt, das ausgewählt ist aus einer Gruppe bestehend aus Stahlblech, aluminiertem Stahlblech, Aluminiumblech und Edelstahlblech.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit identischen Bezugszeichen bezeichnet.
- Figur 1: ist eine isometrische Darstellung einer erfindungsgemäßen Teleskopschiene von schräg oben im vollständig ausgezogenen Zustand.
- Figur 2: ist eine teilweise transparente Seitenansicht der Teleskopschiene aus Figur 1.
- Figur 3: ist eine Ansicht von oben auf die Teleskopschiene aus den Figuren 1 und 2.
- Figur 4: ist eine vergrößerte, teilweise weggebrochene und transparente Darstellung des Überdeckungsbereichs des ersten bis dritten Schienenelements der Teleskopschiene aus den Figuren 1 bis 3 im vollständig ausgezogenen Zustand.
- Figur 5: ist eine Schnittansicht durch die Teleskopschiene aus den Figuren 1 bis 4 im vollständig eingeschobenen Zustand.
- Figur 6: ist eine Schnittansicht einer alternativen Ausführungsform einer erfindungsgemäßen Teleskopschiene im vollständig eingeschobenen Zustand.
- Figur 7: ist eine Schnittansicht einer weiteren Ausführungsform einer erfindungsgemäßen Teleskopschiene im vollständig eingeschobenen Zustand.

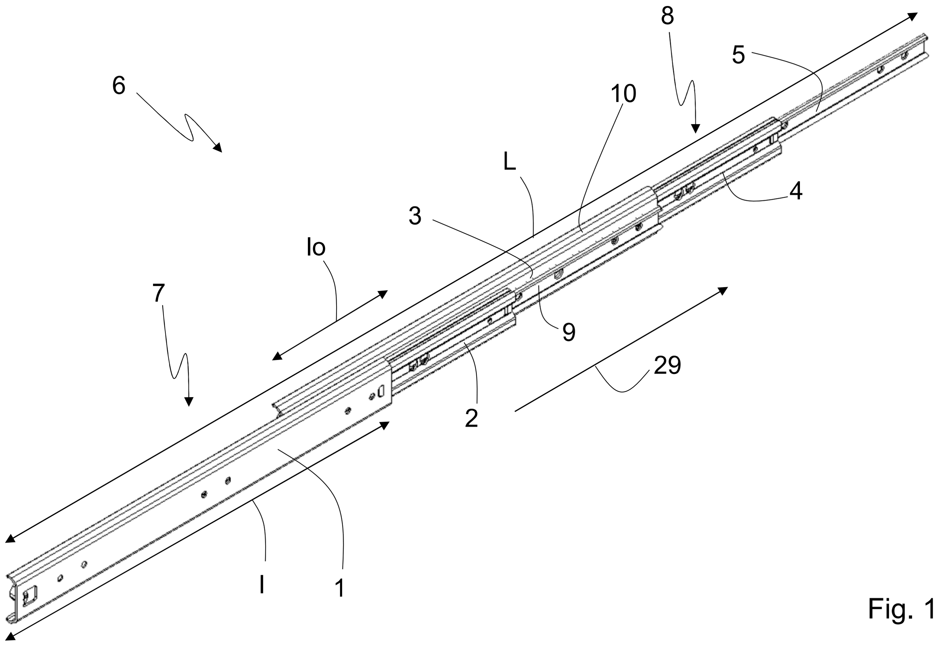

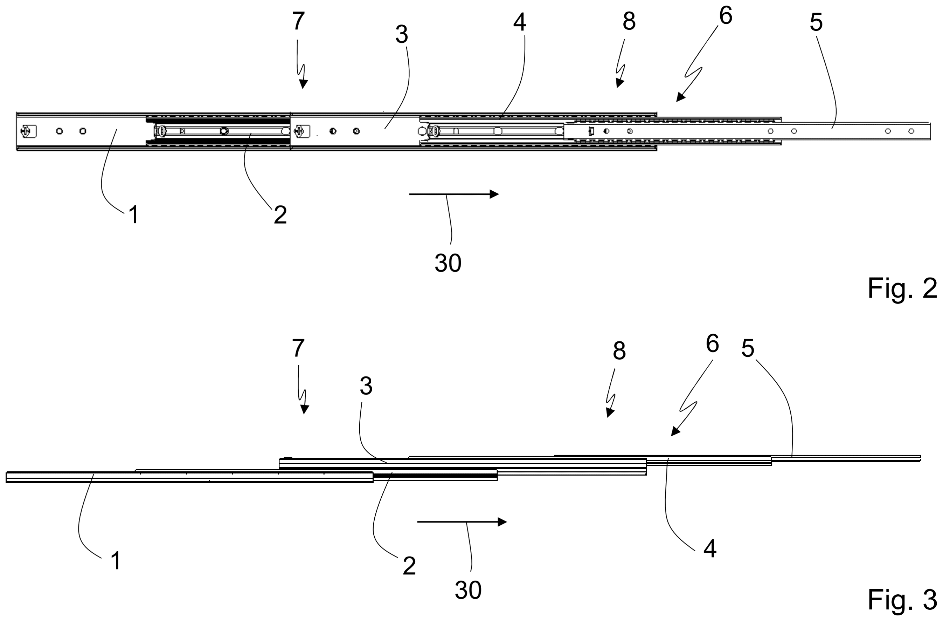

Die Figuren 1 bis 4 illustrieren eine erfindungsgemäße, fünfteilige Teleskopschiene 6. Die Teleskopschiene 6 umfasst fünf Schienenelemente, ein erstes Schienenelement 1, ein zweites Schienenelement 2, ein drittes Schienenelement 3, ein viertes Schienenelement 4 und ein fünftes Schienenelement 5.

Die dargestellte Teleskopschiene hat ein Auszugsverhältnis von 150%. Dies bedeutet, dass die Länge L der Teleskopschiene 6 im in der Auszugsrichtung 30 vollständig ausgezogenen Zustand (dieser ist in den Figuren 1 bis 4 dargestellt) geteilt durch die Einbaulänge I der Teleskopschiene multipliziert mit 100 150 % beträgt. Dabei ist die Einbaulänge I gleich der Länge des ersten Schienenelements 1, welche gleich der Länge der Teleskopschiene 6 im vollständig eingeschobenen oder geschlossenen Zustand ist.

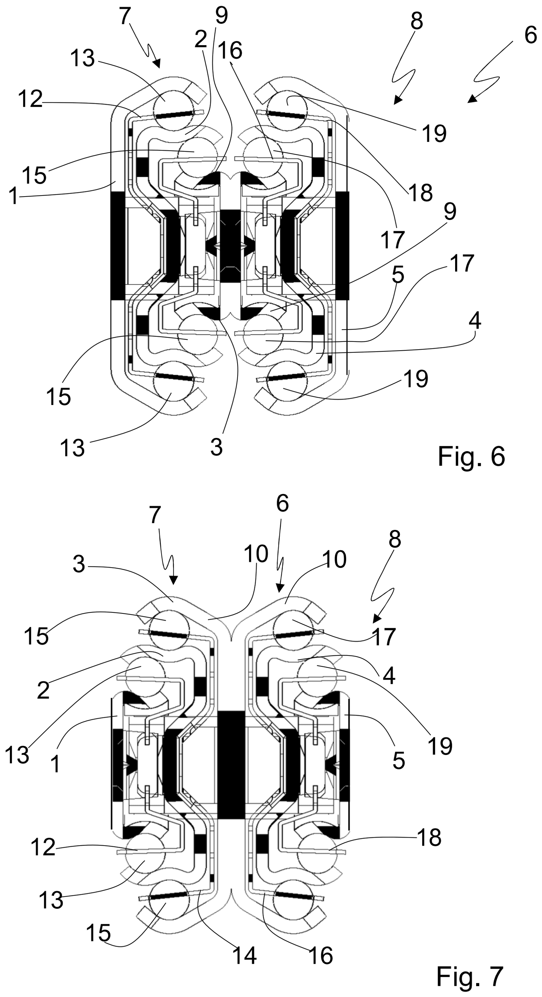

In der Ausführungsform der Figuren 1 bis 5, aber auch in den Ausführungsformen der Figuren 6 und 7 ist die Teleskopschiene 6 jeweils aus zwei identischen ersten und zweiten Auszügen 7, 8 aufgebaut. Jeder der ersten und zweiten Auszüge 7, 8 umfasst eine Korpusschiene, eine Mittenschiene und eine Schubschiene. In den gezeigten Ausführungsformen wird die Korpusschiene auch als Außenschiene 10 bezeichnet, da sie die beiden anderen Schienenelemente C-förmig umgreift. Die Schubschiene wird auch als Innenschiene 9 bezeichnet, da sie innenliegend angeordnet ist. Die Korpusschienen oder die Schubschienen der Auszüge 7, 8 sind miteinander verschweißt, um das dritte Schienenelement 3 zu bilden.

Dabei unterscheiden sich die Ausführungsformen der Figuren 1 bis 6, der Figur 7 und der Figur 8 dadurch, welche Schienen miteinander verschweißt sind. In dem Beispiel der Figuren 1 bis 5 ist die Innenschiene 9 des ersten Auszugs 7 mit der Außenschiene 10 des zweiten Auszugs 8 verschweißt, wohingegen in der Ausführungsform der Figur 6 die zwei Innenschienen 9 der ersten und zweiten Auszüge 7, 8 miteinander verschweißt sind und in der Ausführungsform der Figur 7 sind die zwei Außenschienen 10 des ersten und des zweiten Auszugs 7, 8 miteinander verscheißt sind. In der Ausführungsform der Figuren 1 bis 5 ist das erste Schienenelement 1 als Außenschiene ausgebildet, da sie das zweite Schienenelement 2 und die Hälfte des dritten Schienenelements 3 C-förmig umgreift.

Das Auszugsverhältnis von 150% bleibt deutlich unter dem, was sich mit einer fünfteiligen Teleskopschiene 6 der Einbaulänge I anderenfalls erzielen lässt. Ihr Auszug ist begrenzt. Auf diese Weise wird die Tragkraft der Teleskopschiene 6 erheblich gesteigert.

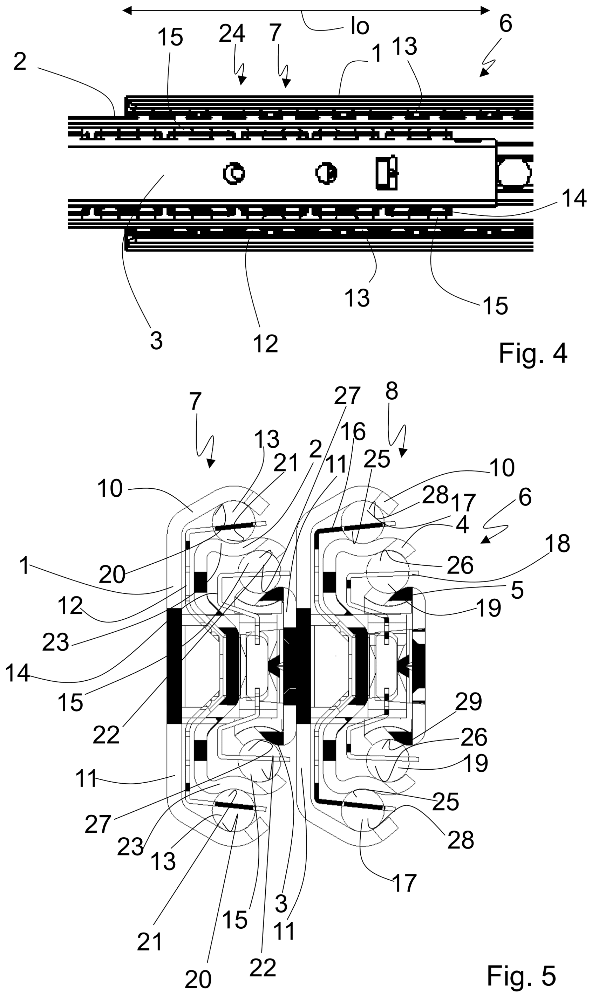

Diese Tragkraftsteigerung ergibt sich insbesondere für das Konstruktionsprinzip der einzelnen Schienenelemente 1, 2, 3, 4, 5 und der aus diesen gebildeten Auszüge 7, 8. Der Aufbau der beiden ersten und zweiten Auszüge 7, 8 ist in den Schnittansichten der Figuren 5 bis 7 gut zu erkennen. Die Schienenelemente 1, 2, 3, 4, 5 sind jeweils aus C-förmigen, durch Rollformen ausgebildeten Stahlblechen hergestellt. Für das dritte Schienenelement 3 sind jeweils zwei solcher C-förmigen Stahlbleche an ihren Schienenrücken 11 miteinander verbunden.

Zwischen jeweils zwei Schienenelementen ist ein Wälzkörperkäfig mit einer Mehrzahl von darin aufgenommenen Wälzkörpern angeordnet. Daher bilden aneinandergelagerte Schienenelemente zusammen mit dem jeweiligen Wälzkörperkäfig und der Mehrzahl von in dem Wälzkörperkäfig aufgenommenen Wälzkörpern ein lineares Wälzlager. Dabei sind in den gezeigten Ausführungsformen die Wälzkörper von Lagerkugeln gebildet, sodass die Wälzkörperkäfige Kugelkäfige sind.

Ein erster Kugelkäfig 12 ist zwischen dem ersten Schienenelement 1 und im zweiten Schienenelement 2 angeordnet. Die in diesem ersten Kugelkäfig 12 aufgenommenen Lagerkugeln werden als erste Lagerkugeln 13 bezeichnet. Zwischen dem zweiten Schienenelement 2 und dem dritten Schienenelement 3 ist ein zweiter Kugelkäfig 14 mit darin aufgenommenen zweiten Lagerkugeln 15 angeordnet. Zwischen dem dritten Schienenelement 3 und dem vierten Schienenelement 4 ist ein dritter Kugelkäfig 16 mit einer Mehrzahl von dritten Lagekugeln 17 angeordnet. Schließlich ist zwischen dem vierten Schienenelement 4 und dem fünften Schienenelement 5 ein vierter Kugelkäfig 18 mit vierten Lagerkugeln 19 vorgesehen.

Damit die Lagerkugeln 13, 15, 17, 19 zwischen den Schienenelementen 1, 2, 3, 4, 5 wälzen können, weist jedes Schienenelement Laufflächen auf, auf denen die Lagerkugeln 13, 15, 17, 19 abrollen. Das erste Schienenelement 1 und das fünfte Schienenelement 5 weisen jeweils ein einziges Paar von Laufflächen 20, 29 auf. Alle zwischen dem ersten Schienenelement 1 und dem fünften Schienenelement 5 angeordneten Schienenelemente 2, 3, 4 verfügen demgegenüber jeweils über zwei Paare von Laufflächen. Dabei sind die zwei Paare von Laufflächen des zweiten Schienenelements 2 und des vierten Schienenelements 4 einerseits und die zwei Paare von Laufflächen des dritten Schienenelements 3 andererseits voneinander abweichend ausgestaltet.

Das zweite Schienenelement 2 weist ein erstes Paar von Laufflächen 21 auf, auf denen ersten Lagerkugeln 13 abrollen. Das zweite Paar von Laufflächen 22 des zweiten Schienenelements 2 hingegen dient als Laufflächen für die zweiten Lagerkugeln 15. Die Laufflächen des ersten Paars von Laufflächen 21 sind so ausgestaltet, dass ihre Oberflächennormalen voneinander Weg zeigen, während die Oberflächennormalen auf den Laufflächen 22 des zweiten Paars von Laufflächen zueinander hinzeigen. Da die Laufflächen des ersten Paars und die Laufflächen 22 des zweiten Paars paarweise jeweils auf einem Schenkel 23 des C-förmigen Stahlblechprofils des zweiten Schienenelements 2 angeordnet sind, wirken im vollständig ausgezogenen Zustand die ersten Lagerkugeln 13 und die zweiten Lagerkugeln 15 einer Verformung des zweiten Schienenelements 2 entgegen. Die Kräfte werden über die Lagerkugeln von Schienenelement zu Schienenelement weitergeleitet, wodurch sowohl das zweite Schienenelement 2 als auch das dritte Schienenelement 3 oder das zweite Schienenelement 2 und das erste Schienenelement 1 gleichzeitig deformiert werden müssten. Dieses Konstruktionsprinzip ist insbesondere bei Erreichen des vollständig ausgezogenen Zustands der Teleskopschiene 6, so wie er in den Figuren 1 bis 4 gezeigt ist, relevant.

Figur 4 zeigt eine teilweise weggebrochene und transparente Ansicht des ersten Auszugs 7. Dargestellt ist der Überdeckungsbereich 24 des ersten Schienenelements 1 mit dem zweiten Schienenelement 2 und dem dritten Schienenelement 3 im vollständig ausgezogenen Zustand der Teleskopschiene 6. Es ist deutlich zu erkennen, dass in diesem Überdeckungsbereich 24 die ersten Lagerkugeln 13 und die zweiten Lagerkugeln 15 das zweite Schienenelement 2 im gesamten Überdeckungsbereich 24 beidseitig abstützen, was auch in diesem, die maximale Belastung der Teleskopschiene 6 darstellenden Fall einer Verbiegung des zweiten Schienenelements 2 verhindert. Auf diese Weise ist die Gesamttraglast, die sonst durch übermäßige elastische Deformation oder durch die Versagensgrenze des zweiten Schienenelements 2 bestimmt wäre, deutlich erhöht.

Das vierte Schienenelement 4 weist einen identischen Aufbau auf wie das zweite Schienenelement 2 auf, nur dass seine Paare von Laufflächen 25, 26 für die dritten bzw. vierten Lagerkugeln 17, 18 vorgesehen sind.

Auch das dritte Schienenelement 3 weist zwei Paare von Laufflächen 27, 28 auf. Diese sind allerdings nicht so angeordnet, dass sich die von den zweiten Lagerkugeln 15 und den dritten Lagerkugeln 17 in diese Laufflächen eingetragenen Kräfte aufheben. Die erhöhte Stabilität des dritten Schienenelements wird aber dadurch erzielt, dass sich in den gezeigten Ausführungsformen zwei Rücken der Schub- bzw. Korpusschienen der Auszüge 7, 8 aneinander erstrecken und miteinander verschweißt sind.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: erstes Schienenelement
- 2: zweites Schienenelement
- 3: drittes Schienenelement
- 4: viertes Schienenelement
- 5: fünftes Schienenelement
- 6: Teleskopschiene
- 7: erster Auszug
- 8: zweiter Auszug
- 9: Innenschiene (auch Schubschiene)
- 10: Außenschiene (auch Korpusschiene)
- 11: Schienenrücken
- 12: erster Kugelkäfig
- 13: erste Lagerkugel
- 14: zweiter Kugelkäfig
- 15: zweite Lagerkugel
- 16: dritter Kugelkäfig
- 17: dritte Lagerkugel
- 18: vierter Kugelkäfig
- 19: vierte Lagerkugel
- 20, 21, 22, 25, 26, 27, 28, 29: Lauffläche
- 23: Schenkel
- 24: Überdeckungsbereich
- 30: Auszugsrichtung

- L: Auszugslänge
- I: Einbaulänge
- lo: Überdeckungslänge

## Patentansprüche

1. Teleskopschiene (6) mit
einem ersten Schienenelement (1),
einem ersten Wälzkörperkäfig (12) mit einer darin aufgenommenen Mehrzahl von ersten Wälzkörpern (13),
einem zweiten Schienenelement (2),
einem zweiten Wälzkörperkäfig (14) mit einer darin aufgenommenen Mehrzahl von zweiten Wälzkörpern (15),
einem dritten Schienenelement (3),
einem dritten Wälzkörperkäfig (16) mit einer darin aufgenommenen Mehrzahl von dritten Wälzkörpern (17),
einem vierten Schienenelement (4),
wobei das erste Schienenelement (1), das zweite Schienenelement (2) und der erste Wälzkörperkäfig (12) mit der Mehrzahl von ersten Wälzkörpern (13) ein lineares erstes Wälzlager bilden, so dass das zweite Schienenelement (2) in und entgegen einer Auszugsrichtung (30) verschiebbar an dem ersten Schienenelement (1) gelagert ist,
wobei das zweite Schienenelement (2), das dritte Schienenelement (3) und der zweite Wälzkörperkäfig (14) mit der Mehrzahl von zweiten Wälzkörpern (15) ein lineares zweites Wälzlager bilden, so dass das dritte Schienenelement (3) in und entgegen der Auszugsrichtung (30) verschiebbar an dem zweiten Schienenelement (2) gelagert ist, und wobei das dritte Schienenelement (3), das vierte Schienenelement (4) und der dritte Wälzkörperkäfig (16) mit der Mehrzahl von dritten Wälzkörpern (17) ein lineares drittes Wälzlager bilden, so dass das vierte Schienenelement (4) in und entgegen der Auszugsrichtung (30) verschiebbar an dem dritten Schienenelement (3) gelagert ist, und
**dadurch gekennzeichnet, dass**
die Teleskopschiene (6) einen vierten Wälzkörperkäfig (18) mit einer darin aufgenommenen Mehrzahl von vierten Wälzkörpern (19) und
ein fünftes Schienenelement (5) aufweist,
wobei das vierte Schienenelement (4), das fünfte Schienenelement (5) und der vierte Wälzkörperkäfig (18) mit der Mehrzahl von vierten Wälzkörpern (19) ein lineares viertes Wälzlager bilden, so dass das fünfte Schienenelement (5) in und entgegen der Auszugsrichtung (30) verschiebbar an dem vierten Schienenelement (4) gelagert ist, und
wobei das erste, zweite, dritte, vierte und fünfte Schienenelement (1, 2, 3, 4, 5) sowie der erste, der zweite, der dritte und der vierte Wälzkörperkäfig (12, 14, 16, 18) derart ausgestaltet sind, dass die Teleskopschiene (6) ein Auszugsverhältnis in einem Bereich von 125 % bis 170 % aufweist.

2. Teleskopschiene (6) nach dem vorhergehenden Anspruch, wobei das erste Schienenelement (1) und das zweite Schienenelement (2) zueinander, das zweite Schienenelement (2) und das dritte Schienenelement (3) zueinander, das dritte Schienenelement (3) und das vierte Schienenelement (4) zueinander sowie das vierte Schienenelement (4) und das fünfte Schienenelement (5) zueinander jeweils ein Auszugsverhältnis in einem Bereich von 30 % bis 50 % aufweisen.

3. Teleskopschiene (6) nach einem der vorhergehenden Ansprüche, wobei zumindest der erste Wälzkörperkäfig (12) derart ausgestaltet ist, dass in einem vollständig ausgezogenen Zustand der Teleskopschiene (6) ein maximaler Abstand in der Auszugsrichtung (30) zweier erster Wälzkörper (13) voneinander in einem Überdeckungsbereich des ersten Schienenelements (1) und des zweiten Schienenelements (2) mindestens 80 % einer Überdeckungslänge (lo) des ersten Schienenelements (1) und des zweiten Schienenelements (2) in der Auszugsrichtung (30) beträgt, oder der zweite Wälzkörperkäfig (14) derart ausgestaltet ist, dass in dem vollständig ausgezogenen Zustand der Teleskopschiene (6) ein maximaler Abstand in der Auszugsrichtung (30) zweier zweiter Wälzkörper (15)voneinander in einem Überdeckungsbereich (24) des zweiten Schienenelements (2) und des dritten Schienenelements (3) mindestens 80 % einer Überdeckungslänge (lo) des zweiten Schienenelements (2) und des dritten Schienenelements (3) in der Auszugsrichtung (30) beträgt, oder der dritte Wälzkörperkäfig (16) derart ausgestaltet ist, dass in dem vollständig ausgezogenen Zustand der Teleskopschiene (6) ein maximaler Abstand in der Auszugsrichtung (30) zweier dritter Wälzkörper (17) voneinander in einem Überdeckungsbereich des dritten Schienenelements (3) und des vierten Schienenelements (4) mindestens 80 % einer Überdeckungslänge (lo) des dritten Schienenelements (3) und des vierten Schienenelements (4) in der Auszugsrichtung (30) beträgt, oder der vierte Wälzkörperkäfig (18) derart ausgestaltet ist, dass in dem vollständig ausgezogenen Zustand der Teleskopschiene (6) ein maximaler Abstand in der Auszugsrichtung (30) zweier vierter Wälzkörper (4) voneinander in einem Überdeckungsbereich (24) des vierten Schienenelements (4) und des fünften Schienenelements (5) mindestens 80 % einer Überdeckungslänge (lo) des vierten Schienenelements (4) und des fünften Schienenelements (5) in der Auszugsrichtung (30) beträgt.

4. Teleskopschiene (6) nach dem der vorhergehenden Anspruch, wobei das zweite Schienenelement (2) ein erstes und ein zweites Paar von Laufflächen (21, 22) aufweist, wobei die Mehrzahl von ersten Wälzkörpern (13) auf dem ersten Paar von Laufflächen (21) abrollt und die Mehrzahl von zweiten Wälzkörpern (15) auf dem zweiten Paar von Lauflächen (22) abrollt, wobei jeweils eine aus dem erste Paar von Laufflächen (21) und eine aus dem zweiten Paar von Laufflächen (22) voneinander wegzeigend an einem Abschnitt (23) des zweiten Schienenelements (2) angeordnet sind, und
wobei das vierte Schienenelement (4) ein erstes und ein zweites Paar von Laufflächen aufweist, wobei die Mehrzahl von dritten Wälzkörpern (17) auf dem ersten Paar von Laufflächen wälzt und die Mehrzahl von vierten Wälzkörpern (19) auf dem zweiten Paar von Lauflächen abrollt, und wobei jeweils eine aus dem ersten Paar von Laufflächen (25) und eine aus dem zweiten Paar von Laufflächen (36) voneinander wegzeigend an einem Abschnitt des vierten Schienenelements (4) angeordnet sind.

5. Teleskopschiene (6) nach einem der vorhergehenden Ansprüche, wobei das erste, das zweite, das dritte, das vierte und das fünfte Schienenelement (1, 2, 3, 4, 5) eine in der Auszugsrichtung (30) gleiche Länge (I) aufweisen.

6. Teleskopschiene (6) nach einem der vorhergehenden Ansprüche, wobei der erste, der zweite, der dritte und der vierte Wälzkörperkäfig (12, 14, 16, 18) eine in der Auszugsrichtung (30) gleiche Länge aufweisen.

7. Teleskopschiene (6) nach einem der vorhergehenden Ansprüche, wobei die Teleskopschiene (6) aus einem ersten dreiteiligen Auszug (7) und einem zweiten dreiteiligen Auszug (8) gebildet ist, wobei der erste und der zweite dreiteilige Auszug (7, 8) jeweils eine Korpusschiene (10), eine Schubschiene (9) und eine Mittenschiene aufweist, und wobei die Korpusschiene (10) oder die Schubschiene (9) des ersten Auszugs (7) und die Korpusschiene (10) oder die Schubschiene (9) des zweiten Auszugs (8) zu dem dritten Schienenelement (3) verbunden sind.

8. Teleskopschiene (6) nach dem vorhergehenden Anspruch, wobei die Korpusschiene oder die Schubschiene des ersten Auszugs (7) und die Korpusschiene oder die Schubschiene des zweiten Auszugs (8) durch Verschweißen verbunden sind.

9. Teleskopschiene (6) nach Anspruch 7 oder 8, wobei der erste und der zweite Auszug (7, 8) identisch aufgebaut sind.

10. Teleskopschiene (6) nach einem der Ansprüche 7 bis 9, wobei die Korpusschiene des ersten Auszugs (7) und die Schubschiene des zweiten Auszugs (8) miteinander verbunden sind.

11. Teleskopschiene (6) nach einem der vorhergehenden Ansprüche, wobei das erste, das zweite, das dritte, das vierte und das fünfte Schienenelement (1, 2, 3, 4, 5) jeweils aus einem Stahlblechprofil, vorzugsweise aus einem gebogenen Stahlblechprofil, bestehen.
